# EUROPEAN PATENT SPECIFICATION

(11) **EP 1 540 699 B1**
(45) Date of publication and mention of the grant of the patent: **11.07.2007**
(21) Application number: 03795147.2
(22) Date of filing: 04.09.2003
(51) Int. Cl.: H01J 61/067, H01J 61/12, H01J 61/42

(54) **LOW-PRESSURE GAS DISCHARGE LAMP WITH AN ALKALINE EARTH OXIDE MIXTURE AS THE ELECTRON EMITTER SUBSTANCE**
NIEDERDRUCKGASENTLADUNGSLAMPE MIT EINER MISCHUNG VON ERDALKALIMETALL-OXIDEN ALS ELEKTRONENEMITTIERENDE SUBSTANZ
LAMPE A DECHARGE GAZEUSE BASSE PRESSION COMPRENANT UN MELANGE D'OXYDE ALCALINO-TERREUX COMME SUBSTANCE EMETTRICE D'ELECTRONS

(30) Priority: 12.09.2002 DE 10242245
(43) Date of publication of application: 15.06.2005
(73) Proprietor: Philips Intellectual Property & Standards GmbH, 20099 Hamburg (DE); Koninklijke Philips Electronics N.V., 5621 BA Eindhoven (NL)
(72) Inventor: SCHOLL, Robert Peter, c/o Philips Intellectual, 52066 Aachen (DE); HILBIG, Rainer, c/o Philips Intellectual, 52066 Aachen (DE)
(74) Representative: Meyer, Michael Josef
(86) International application number: PCT/IB2003/003871
(87) International publication number: WO 2004/025687

(56) References cited:
- DE-A- 10 044 562
- US-A- 6 137 225
- PATENT ABSTRACTS OF JAPAN vol. 013, no. 220 (E-762), 23 May 1989 (1989-05-23) & JP 01 033844 A (HITACHI LTD), 3 February 1989 (1989-02-03)

## Description

The invention relates to a low-pressure gas discharge lamp equipped with a gas-discharge vessel containing a gas filling, with electrodes and with means for generating and maintaining a low-pressure gas discharge.

The generation of light in low-pressure gas discharge lamps is based on the fact that charge carriers, especially electrons but also ions, are accelerated so strongly by an electrical field between the electrodes of the lamp that, in the gas filling of the lamp, owing to collisions with the gas atoms or molecules of the gas filling, they excite or ionize them. When the atoms or molecules of the gas filling return to their normal state, a part of the excitation energy, which may be greater or smaller, is converted into radiation.

Conventional low-pressure gas discharge lamps contain mercury in the gas filling, and are also equipped with a fluorescent coating internally on the gas-discharge vessel. It is a disadvantage of mercury low-pressure gas discharge lamps that mercury vapor emits radiation primarily in the high-energy but invisible UV-C range of the electromagnetic spectrum, which radiation can be converted into visible radiation, with significantly lower energy, only by using these fluorescent materials. The energy difference is hereby converted into undesirable thermal radiation.

The mercury in the gas filling is also increasingly regarded as an environmentally polluting and toxic substance, which should be avoided where possible in modern mass production owing to the environmental hazard involved in its use, production and disposal.

It is already known that the spectrum of low-pressure gas discharge lamps can be influenced by replacing the mercury in the gas filling with other substances. For instance, German patent submissions DE 100 44 562, DE 100 44 563 and DE 101 28 915 describe low-pressure gas discharge lamps containing a gas filling comprising a copper compound, an indium compound or a thallium compound together with an inert gas as the buffer gas. They are characterized by a higher radiation yield in the visible range of the electromagnetic spectrum than conventional low-pressure mercury discharge lamps. The visual efficiency can also be yet further improved by the addition of additives and fluorescent materials and by controlling the internal lamp pressure and the operating temperature.

In conventional low-pressure gas discharge lamps, internal electrodes are typically used in the discharge lamp. In order to reduce the electron work function on these electrodes and thereby the current coupling losses, alkaline earth oxides or mixtures of alkaline earth oxides may be used. For example, it is known from US patent submission 2 449 113 that alkaline earth oxides may be used as electron emitter substances in electrodes.

It is also known from international patent application WO 99/21213 that the electrodes of low-pressure gas discharge lamps can be coated with an electron emitter substance comprising a mixture of alkaline earth oxides. The service life of lamps of this kind is thereby increased and the work function reduced.

However, the alkaline earth oxide mixtures customary hitherto have not proved successful as electron emitter substances for low-pressure gas discharge lamps containing copper, thallium or indium compounds in their gas filling. The reason is that they react with the alkaline earth oxides, as shown by the following equation, for example:

2 InBr + BaO → BaBr₂ + In₂O.

At the temperatures prevailing in the lamp, this reaction also occurs with copper, thallium and indium halides, and the radiant indium, thallium and copper halides disappear from the discharge as a result, rendering light generation inefficient.

It was therefore the object of the invention to preserve the valuable electron emitter properties of alkaline earth oxides for low-pressure gas discharge lamps which contain indium, thallium or copper halides in the gas filling by altering the mixing ratios customary hitherto for the alkaline earth oxide mixtures used as electron emitters.

In investigations with standard TL electrodes (tungsten filament with triple oxide emitter (BaO, SrO, CaO)) it was demonstrated that indium bromide (InBr) reacts strongly with BaO, but this reactivity decreases within the series of alkaline earth oxides towards the lighter alkaline earth elements. SrO still reacts completely with indium bromide at the typical electrode temperature of 1400 K.

Surprisingly, above 800 K, CaO no longer reacts with indium bromide, and above ambient temperature, MgO no longer shows any reaction whatever with InBr.

It was apparent from these findings that, with an appropriate alteration to the hitherto customary mixing ratio of alkaline earth oxide emitters, their use is possible even in low-pressure gas discharge lamps containing indium, thallium or copper halides in their gas filling.

The invention therefore relates to a low-pressure gas discharge lamp, which is equipped with a gas-discharge vessel containing an inert gas filling as the buffer gas and an indium, thallium and/or copper halide, and with electrodes and with means for generating and maintaining a low-pressure gas discharge, and which has, as the electron emitter substance, a mixture of BaO, SrO, CaO and MgO, wherein:
a) the molar proportion of BaO is less than 1 percent by weight
b) the molar proportion of SrO is less than 10 percent by weight
c) the sum of the molar proportions of CaO and MgO is greater than 90 percent by weight, wherein the CaO proportion in the CaO/MgO mixture lies between 10 and 90 percent by weight.

The molar ratio of CaO to MgO should be selected such that, on the one hand, sputter resistance is high, which points to a high MgO proportion, whilst, on the other, the work function Φ should be low, which favors a high CaO proportion (Φ (CaO) = 1.6 eV, Φ (MgO) = 3.1 eV). By means of a balanced ratio of the MgO proportion to the CaO proportion, electrodes combining a high sputter resistance with low work function for the electrons may be designed. It is expedient if the design of the electrodes and the position of the emitter are such that, in operation of the electrodes, the CaO lies at electrode locations that are hotter than 800 K.

The low-pressure gas discharge lamp in accordance with the invention contains an inert gas from the group helium, neon, argon, krypton and xenon as the buffer gas. The cold pressure of the inert gas advantageously equals 2 to 10 mbar, especially 3.4 mbar.

In the lamp in accordance with the invention, a molecular gas discharge takes place at low pressure, emitting radiation in the visible and near UVA range of the electromagnetic spectrum. To convert the UV light into visible light, fluorescent materials are used, which are applied to the interior and/or exterior of the discharge vessel. These fluorescent materials or combinations of fluorescent materials do not have to be applied to the interior of the gas discharge vessel, but may also be applied to the exterior, since the generated radiation in the UVA range is not absorbed by the types of wall material normally used for the discharge vessel. The materials that can be used as fluorescent materials must absorb the generated radiation and must emit in a suitable wavelength range.

The stated alkaline earth oxide mixture may also advantageously be used as the electron emitter substance for coating a titanium, zirkonium, hafnium or tungsten electrode. Use of titanium, zirkonium or hafnium as electrode matel material enhances the formation of cacium or magnium as an electron emitter substance.

## Claims

1. A low-pressure gas discharge lamp, which is equipped with a gas-discharge vessel containing an inert gas filling as the buffer gas and an indium, thallium and/or copper halide, and with electrodes and with means for generating and maintaining a low-pressure gas discharge, **characterized in that** it has, as the electron emitter substance, a mixture of BaO, SrO, CaO, and MgO, wherein:
a) the molar proportion of BaO is less than 1 percent by weight,
b) the molar proportion of SrO is less than 10 percent by weight,
c) the sum of the molar proportions of CaO and MgO is greater than 90 percent by weight, while the CaO proportion in the CaO/MgO mixture lies between 10 and 90 percent by weight.

2. A low-pressure gas discharge lamp as claimed in claim 1, **characterized in that** it contains an inert gas from the group of helium, neon, argon, krypton and/or xenon as the buffer gas.

3. A low-pressure gas discharge lamp as claimed in claims 1 and 2, **characterized in that** a fluorescent coating is applied to the interior and/or exterior of the gas discharge vessel.

4. A use of the electron emitter substance of claim 1 for coating electrodes in discharge lamps.

5. A use of the electron emitter substance of claim 1 for coating a titanium, zirkonium, hafnium or tungsten electrode.

## Patentansprüche

1. Niederdruckgasentladungslampe, die mit einem Gasentladungsgefäß, das eine Edelgasfüllung als Puffergas und ein Indium-, Thallium- und/oder Kupferhalogenid enthält, sowie mit Elektroden und Mitteln zur Erzeugung und Aufrechterhaltung einer Niederdruckgasentladung ausgerüstet ist, **dadurch gekennzeichnet, dass** sie als Elektronen-Emittersubstanz ein Gemisch von BaO, SrO, CaO und MgO aufweist, in dem
a) der molare Anteil von BaO kleiner als 1 Gewichtsprozent ist,
b) der molare Anteil von SrO kleiner als 10 Gewichtsprozent ist,
c) die Summe der molaren Anteile von CaO und MgO größer als 90 Gewichtsprozent ist, wobei der CaO-Anteil im CaO/MgO-Gemisch zwischen 10 und 90 Gewichtsprozent liegt

2. Niederdruckgasentladungslampe nach Anspruch 1, **dadurch gekennzeichnet, dass** sie als Puffergas ein Edelgas aus der Gruppe Helium, Neon, Argon, Krypton und/oder Xenon enthält.

3. Niederdruckgasentladungslampe nach den Ansprüchen 1 und 2, **dadurch gekennzeichnet, dass** auf der Innen- und/oder Außenseite des Gasentladungsgefäßes eine Leuchtstoffschicht aufgebracht ist.

4. Verwendung der Elektronen-Emittersubstanz von Anspruch 1 zur Beschichtung von Elektroden in Entladungslampen.

5. Verwendung der Elektronen-Emittersubstanz von Anspruch 1 zur Beschichtung einer Titan-, Zirconium-, Hafnium- oder Wolfram-Elektrode.

## Revendications

1. Lampe à décharge de gaz à basse pression qui est équipée d'une enceinte de décharge qui contient un remplissage de gaz inerte comme gaz tampon et un halogénure d'indium, de thallium et / ou de cuivre, avec des électrodes et des moyens pour générer et entretenir une décharge de gaz à basse pression, **caractérisée en ce qu'**elle a, comme substance émettrice d'électrons, un mélange de BaO, SrO, CaO et MgO, dans lequel :
a) la proportion molaire de BaO est inférieure à 1 pourcent en poids,
b) la proportion molaire de SrO est inférieure à 10 pourcents en poids,
c) la somme des proportions molaires de CaO et MgO est supérieure à 90 pourcents en poids, alors que la proportion de CaO dans le mélange CaO / MgO se trouve entre 10 et 90 pourcents en poids.

2. Lampe à décharge de gaz à basse pression selon la revendication 1, **caractérisée en ce qu'**elle contient, comme gaz tampon, un gaz inerte du groupe constitué de l'hélium, du néon, de l'argon, du krypton et / ou du xénon.

3. Lampe à décharge de gaz à basse pression selon les revendications 1 et 2, **caractérisée en ce qu'**un revêtement fluorescent est appliqué à l'intérieur et / ou l'extérieur de l'enceinte à décharge de gaz.

4. Utilisation d'une substance émettrice d'électrons selon la revendication 1 pour enrober des électrodes dans des lampes à décharge.

5. Utilisation d'une substance émettrice d'électrons selon la revendication 1 pour enrober une électrode en titane, zirconium, hafnium ou tungstène.
